# EUROPÄISCHE PATENTSCHRIFT

(11) **EP 0 549 882 B1**
(45) Veröffentlichungstag und Bekanntmachung des Hinweises auf die Patenterteilung: **22.05.1996**
(21) Anmeldenummer: 92120008.5
(22) Anmeldetag: 25.11.1992
(51) Int. Cl.: B01D 29/09, B01D 29/11, B01D 29/82, B30B 9/06

(54) **Vorrichtung zum Behandeln von Lackschlamm**
Apparatus for treating waste paint sludge
Dispositif pour traiter des boues résiduaires de peinture

(30) Priorität: 30.11.1991 DE 9114913 U; 02.04.1992 DE 9204524 U
(43) Veröffentlichungstag der Anmeldung: 07.07.1993
(73) Patentinhaber: Clasmeier, Heinz-Josef, D-54578 Waldsdorf-Zilsdorf (DE)
(72) Erfinder: Clasmeier, Heinz-Josef, D-54578 Waldsdorf-Zilsdorf (DE)
(74) Vertreter: Meldau, Gustav, Dipl.-Ing.

(56) Entgegenhaltungen:
- US-A- 1 354 517
- US-A- 1 661 802
- US-A- 3 033 104
- US-A- 4 287 823

## Beschreibung

Die Erfindung bezieht sich auf eine Vorrichtung zum Behandeln des in Lackierereien anfallenden, aus Lack/Beize und Wasser - ggfs. unter Zugabe eines Koagulierungsmittels o.dgl. - bestehenden Lackschlammes, der aus einer Aufschwemm- und Abscheide-Anlage ausgetragen und in Sieb- bzw. Filterkörben zur Entwässerung gesammelt wird.

Die Sieb- bzw. Filterkörbe haben im allgemeinen einen schmalrechteckigen Grundriß und bestehen aus in Rahmen befestigten Sieben oder Gittern und sie sind üblicherweise auf der Innenseite mit Filterpapieren oder -tüchern ausgelegt.

Eine Entwässerung des Lackschlammes findet in derartigen Siebkörben lediglich aufgrund der Schwerkraft verhältnismäßig unzureichend statt. Der Lackschlamm muß als Sondermüll entsorgt werden zu beträchtlichen Kosten, die nach dem Gewicht berechnet werden. Zudem kann der Lackschlamm nur in Behältern entsorgt werden, da er noch eine gewisse Fließfähigkeit aufweist, wodurch eine weitere Schwierigkeit und damit auch Verteuerung bei der Entsorgung entsteht.

Hier setzt der Gedanke der Erfindung ein, die sich die Aufgabe gestellt hat, den in Lackierereien anfallenden Lackschlamm so stark zu entwässern, daß sein Gewicht und damit das Gewicht des kostenpflichtigen Sondermülls erheblich reduziert wird und im übrigen, das im Lackschlamm enthaltene Wasser dem Kreislauf der Lackiererei wieder zugefügt werden kann, so daß deren Wasserverbrauch erheblich verringert wird.

Zur Lösung dieser Aufgabe ist eine Vorrichtung der gattungsgemäßen Art gekennzeichnet durch einen den offenen Querschnitt des Siebkorbes im wesentlichen ausfüllenden Press-Stempel, der über Zwischenglieder mit einem darüber gestellfest angeordneten Druckerzeuger verbunden ist.

Es ist damit möglich, die im Gebrauch befindlichen Siebkörbe an der Befüllstelle, die aus einer Auffangwanne für das ausgefilterte Wasser besteht oder auch etwas bzw. weiter entfernt davon mit einer Pressvorrichtung zu versehen, die in dem Lackschlamm enthaltenes Wasser auspresst und somit den Wassergehalt des Lackschlammes erheblich reduziert.

Der Press-Stempel besteht dabei aus einem starken Blech. Dieses Blech ist mittels flachwinkliger Abkantungen in Druckrichtung gewölbt, so daß die Außen-links-Kanten tiefer liegen als der Mittelbereich. Das Blech des Press-Stempels ist mit Lochungen versehen bzw. perforiert.

Der Siebkorb ist mit Filtertuch oder -papier ausgekleidet, wie das schon beschrieben ist. Hierzu ist unterhalb der Vorrichtung eine Abrollvorrichtung für das Filtertuch bzw. Filterpapier angebracht. Zur jeweiligen Auskleidung des Filterkorbes für die einzelnen Entwässerungspressungen kann das Filtertuch bzw. Filterpapier für die einzelnen Chargen von der Abrollvorrichtung entnommen werden und für die jeweilige Filterkorbgröße abgetrennt werden.

Eine Perforierung des Press-Stempels bei Anlage von Filtertuch oder -papier auf seiner Press-Seite verbessert die Wirkung beim Auspressen des Wassers aus dem Lackschlamm wesentlich. Die Wölbung des aus Blech bestehenden Press-Stempels in Pressrichtung erlaubt es, den Press-Stempel verhältnismäßig leicht zu bauen, wobei er jedoch aufgrund seiner Formgebung die erforderliche Stabilität beibehält.

Das Zwischenglied zwischen dem Press-Stempel und dem Druckerzeuger besteht aus mindestens einer Druckstange, die auch als verlängerte Kolbenstange ausgebildet sein kann, wenn es sich bei dem Druckerzeuger um einen Druckluftzylinder handelt.

Der Druckerzeuger kann auch ein Spindeltrieb sein.

Die gestellfeste Lagerung des Druckerzeugers bzw. des Druckzylinders ist aus einem den Siebkorb übergreifendem Joch bestehend, das mit einem, den Siebkorb außen umgebenden bzw. diesen aufnehmenden Rahmen verbunden ist.

Das hat den besonderen Vorteil, daß diese Vorrichtung ortsbeweglich ausgebildet ist, so daß sie jeweils an erwünschter Stelle auf den bzw. an den Siebkorb angesetzt werden kann. Üblicherweise ist ein Siebkorb in "Betriebsstellung", nämlich in einer Stellung, in der er mit seiner Öffnung unter dem Auswurfende der Übergabe aus dem Sammel- und Absetzbecken für den Lackschlamm liegt. Der Siebkorb steht dabei in einer Wanne, die das auslaufende bzw. -sickernde Wasser auffängt und üblicherweise steht ein weiterer leerer Siebkorb in Bereitstellung, so daß diese, nach dem Auffüllen des ersten Siebkorbes, gegeneinander ausgetauscht werden können. Das Sammelbecken ist dabei so groß, daß mindestens zwei Siebkörbe in ihm Platz haben. Ein gefüllter Siebkorb kann dann mit der aufsetzbaren Vorrichtung nach der Erfindung versehen werden, um dann unter dem Einfluß des Druckes des Druckerzeugers zweckmäßig bei verhältnismäßig sehr langsam gesteigertem Druck nach und nach ausgepreßt bzw. weitgehend entwässert zu werden. Selbstverständlich ist es auch möglich, zunächst eine Entwässerung in der bisher üblichen Weise unter der Einwirkung der Schwerkraft vor sich gehen zu lassen, um dann anschließend die Vorrichtung nach der Erfindung anzusetzen und eine weitere "Zwangsentwässerung" folgen zu lassen.

Der Sieb- bzw. Filterkorb ist von einem horizontal gelagerten Rahmengestell umgeben, das etwa im oberen Bereich des Sieb- bzw. Filterkorbes angeordnet ist. Das Rahmengestell stabilisiert und verstärkt die Außenflächen des Filterkobes wärend des Pressvorganges. Wärend des Pressvorganges wirkt der Pressdruck ausbeulend insbesondere auf die großen Längsflächen des Filterkorbes. Derartige Ausbeulungen, die auch zu bleibenden Deformierungen führen können, werden durch die anliegenden Streben des Rahmens wirksam vermieden. Weiterhin ermöglicht das Rahmengestell, daß mit der Anlage höhere Pressdrücke gefahren werden können, die zu größeren Entwässerungsgraden führen.

In vorteilhafter Weise besteht das Rahmengestell aus Längs- und Querstreben, wobei die Querstreben an dem Rahmen der Presse gehaltert sind. Durch diese Anordnung des Rahmengestells werden die ausbeulenden Presskräfte von dem Rahmengestell aufgenommen.

Nach einer besonders vorteilhaften Weiterbildung der Erfindung liegen die Längsstreben an der Gitterwandung des Sieb- bzw. Filterkorbes an. Die Längsstreben können somit die sich horizontal wirkenden Presskräfte direkt aufnehmen, sodaß Ausbeulungen nicht eintreten können.

In Weiterbildung der Erfinung sind zumindest die Längsstreben an der Aussenseite an ihren Enden mit den Enden der Querstreben lösbar verbunden. Querstreben und Längsstreben jeweils an ihren Enden lösbar zu verbinden, ermöglicht, daß das Rahmengestell auf einfache Weise geöffnet werden kann, um den Filterkorb nach dem Pressvorgang entweder nach vorne oder nach hinten zur Entleerung bzw. zur Beschickung zu wechseln.

In Zweckmäßiger weise besteht die lösbare Verbindung aus Zapfen, die an den Enden der Längsstreben nach unten ragend in Löcher in den Querstreben einpassen. Durch diese Ausbildung können nach der Druckentlastung der Presse die Längsstreben durch Anheben leicht von den Querstreben entfernt werden. In gleicher weise einfach gestaltet sich der Zusammenbau des Rahmengestells nach dem Korbwechsel, wobei die Längsstrebe nur durch Auflegen auf die Querstreben erfolgt. Die nach unten ragenden Zapfen passen sich dabei in die Löcher der Querstreben ein.

Die Erfindung wird nachstehend anhand eines Ausführungsbeispiels mit Bezug auf die Zeichnungen näher erläutert. In den Zeichnungen zeigen:
- Figur 1 -: eine Seitenansicht, schematischer Überblick über die Gesamtanlage,
- Figur 2 -: längsschnittig einen Filterkorb mit angesetzter Presse,
- Figur 3 -: Querschnitt entsprechend Figur 2, und
- Figur 4 -: eine perspektivische Darstellung der Gesamtanlage mit Verstärkungsrahmen,
- Figur 5 -: eine Draufsicht auf die Gesamtanlage,
- Figur 6 -: eine teilweise geschnittene Darstellung einer Detailansicht der lösbaren Verbindung.

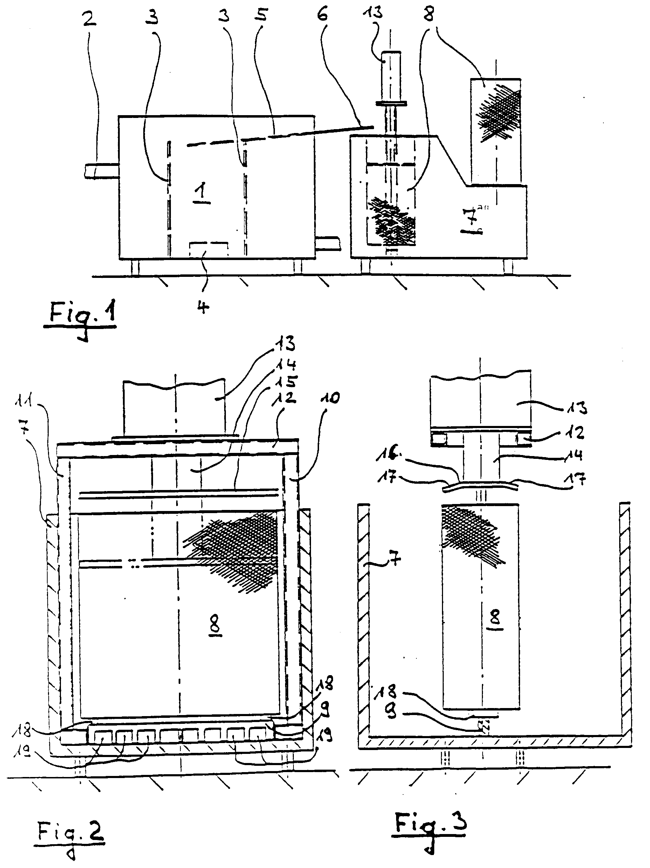

In Figur 1 ist ein Auffangbecken 1 für den aus der Lackiererei anfallenden Lackschlamm dargestellt mit dem Zulauf 2. Innerhalb des Auffangbeckens 1 befinden sich mehrere Zwischen- bzw. Stauwände 3 sowie in Bodennähe, zweckmäßig hinter der ersten Stauwand 3, ein Rühr- oder Propellerwerk 4, das auch mit einer Belüftungsvorrichtung versehen sein kann. Aus dem über den Zulauf 2 zugeführten Wasser mit darin enthaltenem Lackschlamm usw. schwimmt dieser Lackschlamm auf, an die Oberfläche des Wasserspiegels, der über die Oberkanten der Zwischenwände 3 in die nächsten Kammern überfließt. Etwa in dem Wasser absinkende Festteile werden von dem Rührwerk 4 in der zweiten Kammer zweckmäßig unter Beladung mit Luft nach oben gespült, und zwar auf ein leicht geneigtes Blech 5, das mit seinem einen Ende unter den Wasserspiegel taucht und mit dem gegenüberliegenden freien Ende 6 aus dem Auffangbehälter 1 herausragt über die Öffnung einer Wanne 7. Eine hier nicht dargestellte Kratz- und Rechenvorrichtung schiebt in regelmäßigen Abständen den auf das schräg geneigte Blech 5 aufgeschwemmten Lackschlamm über das Ende 6 des Bleches.

In der Wanne 7 ist ein Siebkorb 8 aufgestellt in der Weise, daß das Ende 6 des Bleches 5 über der Öffnung des Siebkorbes 8 liegt.

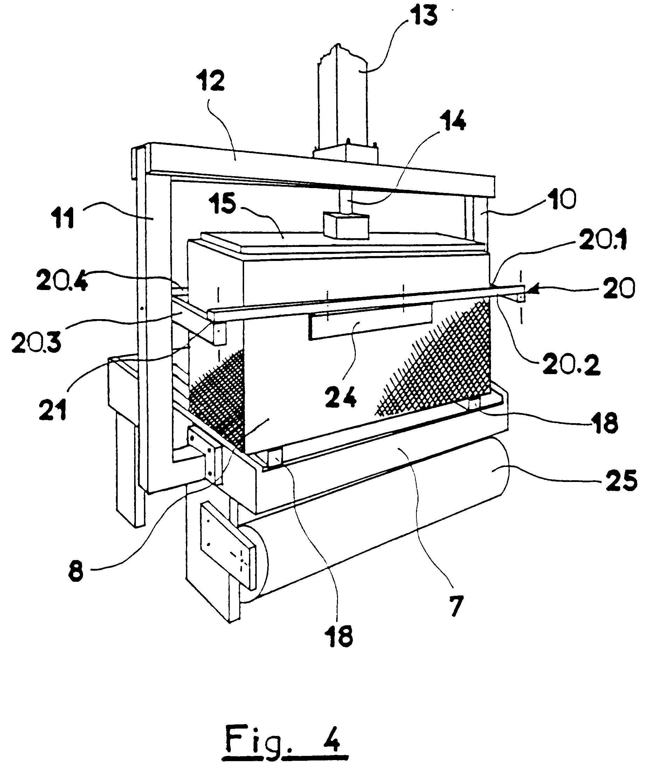

Der Siebkorb 8 besteht beispielsweise aus einem Rahmengestell, in dem für die Seitenflächen und den Boden Siebe befestigt sind. Von innen sind diese Siebe mit einem Filtertuch oder -papier ausgelegt. Das Filtertuch oder -Papier ist auf einer Abrollvorrichtung 25 dargestellt in der Figur 4 gespeichert. Von der Abrollvorrichtung 25 kann das Filtertuch oder -papier für jede beliebige Charge der Größe nach entnommen und abgetrennt werden.

Nach dem Einfördern des Lackschlammes in den Siebkorb 8 entwässert der Lackschlamm unter dem Einfluß der Schwerkraft weiter durch die Seitenwände und den Boden des Filterkorbes. Das Wasser wird in der Wanne 7 aufgefangen und dem Wasserkreislauf der Lackiererei wieder zugeführt.

Eine Pressvorrichtung nach der Erfindung besteht aus einem Rahmen mit einem unteren Aufstand- und Aufsatzbalken 9, an dessen beiden Enden befestigten senkrechten Rahmenteilen 10 und 11 sowie aus einem oberen Joch 12, das parallel zu dem Balken 9 verläuft und die beiden aufstehenden Rahmenteile 10 und 11 miteinander fest verbindet. Das Querjoch 12 kann abnehmbar ausgebildet sein.

In der Mitte des Querjoches 12 ist ein Druckluftzylinder 13 senkrecht befestigt, dessen Kolbenstange 14 nach unten gerichtet das Querjoch 12 durchdringt oder seitlich davon geführt ist. Am unteren Ende der Kolbenstange 14 ist ein Press-Stempel 15 befestigt, der den offenen Querschnitt des Siebkorbes 8 im wesentlichen ausfüllt.

Der Press-Stempel 15 besteht zweckmäßig aus einem starken Blech, das außerhalb der Verbindung mit der Kolbenstange 14 mit Längsknicken 16 in seinen äußeren Bereichen 17 nach unten schräg abgewinkelt ist. Durch diese Formgebung wird einerseits die Stabilität des aus Blech bestehenden Press-Stempels beim Pressvorgang wesentlich verbessert, weil die nach unten schräg abgewinkelten Bereiche 17 des Press-Stempels 15 ein Durchbiegen nach oben wirksam verhindern. Andererseits wird beim Pressvorgang der Inhalt des Siebkorbes 8 wirksam zusammengehalten, so daß er - wenn überhaupt - nur in äußerst geringem Maß an den Kanten des Press-Stempels 15 nach oben an diesem vorbei austreten kann.

Der Press-Stempel ist mit Lochungen bzw. Perforationen versehen und zweckmäßig an der Unterseite mit einem Filtertuch oder -papier belegt in gleicher Weise wie auch die Seitenwände und der Boden des Siebkorbes 8. Durch diese Öffnungen des Press-Stempels ausgepresstes Wasser fließt über die Schrägflächen des Press-Stempels und die Seitenwände des Siebkorbes in die Auffangwanne 7.

Der aus den Teilen 9 bis 12 bestehende Rahmen der Pressvorrichtung ist derart bemessen, daß er den Siebkorb 8 in seinen größeren Längsabmessungen, wie sie in Figur 2 dargestellt sind, umgibt. Siebkörbe einer Anlage haben jeweils gleiche Abmessungen. In diesem Falle wird der Siebkorb 8 auf Halterungssitz 18 auf dem Aufstandbalken 9 aufgestellt. Der Aufstandbalken 9 hat weiterhin auf seiner Unterseite eine Anzahl von Einnehmungen 19, die einen freien Fluß des Wassers in der Auffangwanne 7 begünstigen.

An den Rahmenteilen 9 bis 12 ist ein Rahmengestell 20 gelagert, wie dies in der Figur 4 dargestellt ist. Das horizontal gelagerte Rahmengestell 20 umschließt den Sieb- bzw. Filterkorb 8 im Bereich seiner oberen Hälfte. Zur Bildung eines Rechteckrahmens besteht das Rahmengestell 20 aus Längsstreben 20.1 und 20.3 sowie aus Querstreben 20.2 und 20.4. Dabei sind die Querstreben 20.2 und 20.4 an dem umgebenen Rahmen 10,11 der Vorrichtung gehaltert. Mit den Querstreben 20.2 und 20.4 sind die Längsstreben 20.2 und 20.4 an der Aussenseite an ihren Enden mit den Enden der Querstreben 20.1 und 20.3 lösbar miteinander verbunden. Zur Vergrößerung der Gegenpressfäche des Rahmengestells 20 insbesondere an den Längsseiten, sind an den Längsstreben 20.1 und 20.3 Winkelbleche 24 angebracht, die flächig an der Wandung des Sieb- bzw. Filterkorbes 8 anliegen.

An den Eckstellen des Rechteckrahmens weist das Rahmengestell 20 lösbare Eckverbinder 21 auf, die die Längsstreben 20.1 und 20.3 mit den Querstreben 20.2 und 20.4 verbinden. Die lösbaren Eckverbinder 21 können dabei als Bolzen-, Spann- oder Riegelverschlüsse ausgebildet sein, um das Rahmengestell 20 schnell und sicher für den Wechselvorgang des Sieb-bzw. Filterkorbes 8 zu lösen.

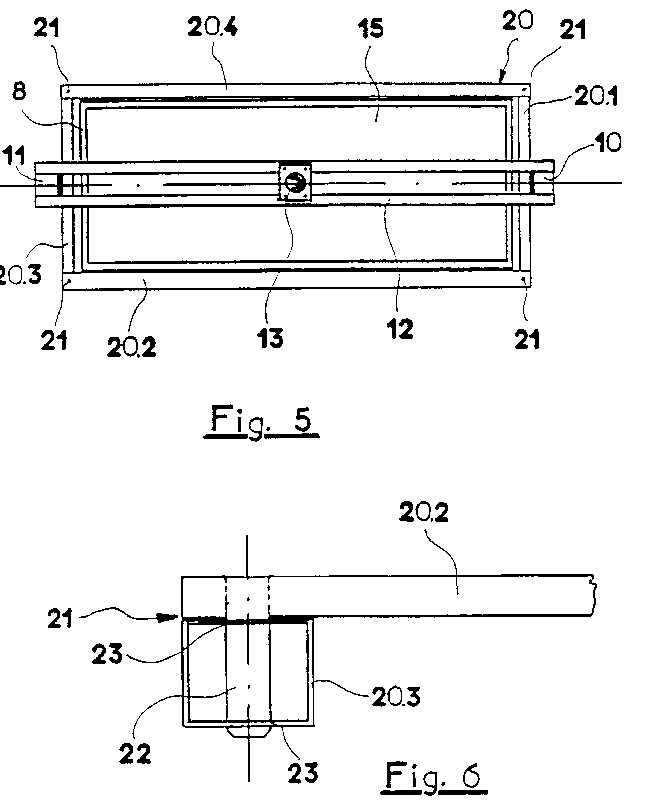

Wie in den Figuren 5 und 6 dargestellt, besteht die lösbare Verbindung 21 aus Zapfen 22. Die Zapfen 22 sind dabei an den Enden der Längsstreben 20.2 und 20.4 nach unten ragend angebracht. Zur Halterung passen sich die Zapfen 22 in Löcher 23 ein, die an den Enden der als Hohlprofil ausgebildeten Querstreben 20.2 und 20.4 angeordnet sind. Diese Verbindung 21 läßt sich nach der Druckentlastung der Vorrichtung durch einfaches Anheben der Längsstrebe 20.2 oder 20.4 einfach lösen, um den Sieb- bzw. Filterkorb 8 vorderseitig bzw. rückseitig aus der Vorrichtung zu entfernen oder die Vorrichtung mit einem leeren Sieb- bzw. Filterkorb 8 wieder zu beschicken.

Das Rahmengestell 20 wirkt verstärkend auf den Sieb- bzw. Filterkorb 8 wärend des Pressvorganges, so daß ein Ausbeulen der Wandungen des Sieb- bzw. Filterkorbes 8 bei hohen Pressdrücken vermieden wird. Zudem ermöglicht das Rahmengestell 20, daß die Anlage auch mit höheren Pressdrücken gefahren werden kann, um so den Entwässerungsgrad des Lackschlammes zu verbessern.

Da der aus den Teilen 9 bis 12 bestehende Rahmen für die Pressvorrichtung frei beweglich sein kann und die Druckluftzuführung zu der Pressvorrichtung zweckmäßig ebenfalls als Schlauch ausgebildet eine freie Beweglichkeit in einem ausreichenden und vorbestimmten Bereich zuläßt, kann der Rahmen mit der Pressvorrichtung an beliebiger Stelle in der Auffangwanne 7 für den Pressvorgang aufgestellt werden oder er ist auch in einer räumlich davon getrennten Wanne aufstellbar, um den Filterkorb über eine längere Zeit von beispielsweise 1 bis 2 Stunden durch Auspressen zu entwässern.

Eine andere Möglichkeit der Ausbildung nach der Erfindung besteht darin, daß der aus den Teilen 9 bis 12 bestehende Rahmen bei abgenommenem Querjoch 12 und bei entsprechender Dimensionierung von außen um die Auffangwanne 7 herumgelegt wird und dann derart positioniert wird, daß bei aufgesetztem Querjoch 12 mit Druckluftzylinder 13 der Press-Stempel 15 in der erforderlichen Weise in den Siebkorb 8 eintaucht. Der Siebkorb 8 ist dann seinerseits in der Auffangwanne 7 abgestellt.

Das Auspressen bzw. Entwässern des in dem Siebkorb 8 enthaltenen Lackschlammes mittels der Pressvorrichtung nach der Erfindung erfolgt zweckmäßig unter langsamen Druckanstieg in dem Druckluftzylinder 13 über einen längeren Zeitraum, wobei die Druckluftzufuhr zu dem Druckluftzylinder beispielsweise mittels eines Zeitschaltventils derart gesteuert werden kann, daß innerhalb bestimmter vorgegebener Zeitabstände jeweils ein kurzes Öffnen und Schließen der Druckluftzuführung zu dem Zylinder erfolgt. Eine andere Möglichkeit besteht darin, die Druckluftzuführung zu dem Zylinder von dem Druck im Zylinder abhängig zu steuern, so daß nach Absinken des Druckes im Zylinder unter einem bestimmten voreingestellten Wert das Zuführungsventil geöffnet wird, bis wieder ein ebenfalls voreingestellter Maximalwert des Druckes in dem Zylinder erreicht ist.

Wenngleich die Pressvorrichtung nach der Erfindung mit dem Rahmen 9 bis 12 ortsfest am Boden des Gebäudes oder auch in einem Gestell befestigt werden kann, so daß dadurch gewissermaßen eine feste Press-Station entsteht, ist es bevorzugt, in der weiter oben beschriebenen Weise die Pressvorrichtung nach der Erfindung ortsbeweglich einzusetzen, so daß sie innerhalb des durch die freie Führung des Druckzuleitungsschlauches vorgegebenen Bereiches in beliebiger Weise aufgestellt und mit einem Siebkorb verbunden werden kann. Es ist dann auch möglich, mehrere derartige Pressvorrichtungen gleichzeitig einzusetzen, wenn in der Lackieranlage entsprechend umfangreicher Anfall von Lackschlamm vorhanden ist. Die verschiedenen Siebkörbe werden dann nach und nach über einen größeren Zeitraum ausgepresst und nacheinander auch ausgeleert, um wieder von neuem mit aus der Lackieranlage zu fließendem Lackschlamm befüllt zu werden.

Versuche haben ergeben, daß mit einer Presse nach der Erfindung das Gewicht des Lackschlammes in einem Filterkorb durch Auspressen des Wassers um mehr als ein Viertel vermindert werden kann. Die Entsorgungskosten für Sondermüll lassen sich dadurch um annähernd ein Drittel reduzieren bei entsprechend geringerer Belastung der Umwelt.

Nach einer anderen hier nicht dargestellten Ausführungsform kann anstelle des Druckluftzylinders 13 auch eine vorzugsweise mittels eines Motors angetriebene Spindel verwendet werden. Die Ortsbeweglichkeit der Pressvorrichtung wird damit nicht beeinträchtigt. Es ist lediglich das Zuführungskabel zu dem Antriebsmotor der Spindel entsprechend der Führung des Druckluftschlauches einzurichten. Aufgrund der weiter oben beschriebenen, durch allmähliche Drucksteigerung zu erreichenden langsamen und dabei wesentlich effektiveren Entwässerung mittels eines Druckluftzylinders erscheint die Verwendung einer Press-Spindel demgegenüber jedoch nicht sehr vorteilhaft zu sein, wenn nicht andere Anforderungsmerkmale überwiegen.

Nach der Erfindung können selbstverständlich auch mehrere Druckluftzylinder 13 an dem Querjoch 12 zur Betätigung des Press-Stempels 15 angeordnet sein, abhängig von der allgemeinen Dimensionierung und/oder anderen Anforderungen. Es kann auch die Kraftübertragung von dem Druckerzeuger auf den Press-Stempel 15 in anderer Weise ausgebildet sein als mit einer Verlängerung der Kolbenstange 14, beispielsweise mit einem Scherengestänge o. dgl., wenn das unter gewissen Bedingungen zweckmäßiger sein sollte.

## Patentansprüche

1. Vorrichtung zum Behandeln des in einer Lackiererei anfallenden, aus einer Aufschwemm- und Abscheideanlage ausgetragenen Lackschlammes aus Lack/Beize und Wasser sowie ggfs. einem Koagulierungsmittel, die oben offene Sieb- oder Filterkörbe (8) zur Aufnahme des Lackschlammes aufweist, die in oder über einer Auffangwanne (7) angeordnet sind, wobei die Sieb- oder Filterkörbe (8) von einem, ihren offenen Querschnitt im wesentlichen ausfüllenden Preßstempel (15), der über mindestens ein Zwischenglied mit einem darüber gestellfest angeordneten Druckerzeuger (13) verbunden ist, beaufschlagbar sind und wobei der Preßstempel (15) aus einem starken Blech besteht, welches mit Lochungen versehen bzw. perforiert ist und vorzugsweise mittels flachwinkliger Abkantungen (17) in Druckrichtung gewölbt ist, so daß die Außenlängskanten tiefer liegen als der Mittelbereich, wobei der Sieb- bzw. Filterkorb (8) im Bereich seiner oberen Hälfte von einem horizontal gelagerten Rahmengestell (20) umgeben ist und die gestellfeste Lagerung des Druckerzeugers (13) bzw. des Druckluftzylinders aus einem, den Siebkorb (8) übergreifenden Joch (12) besteht, das mit einem den Siebkorb (8) außen umgebenden bzw. diesen aufnehmenden Rahmen (9,10,11) verbunden ist.

2. Vorrichtung nach Anspruch 1, **dadurch gekennzeichnet**, daß das Zwischenglied aus mindestens einer Druckstange (15) besteht.

3. Vorrichtung nach Anspruch 2, **dadurch gekennzeichnet**, daß der Druckerzeuger (13) ein Druckluftzylinder ist, dessen Kolben sich in der Druckstange (14) fortsetzt.

4. Vorrichtung nach einem der vorstehenden Ansprüche, **dadurch gekennzeichnet**, daß der Druckerzeuger (13) eine Spindel ist.

5. Vorrichtung nach einem der vorstehenden Ansprüche, **dadurch gekennzeichnet**, daß der Aufstandbalken (9) des Rahmens (9 - 12) auf seiner Oberseite mit Halterungssitzen (18) für den Siebkorb (8) und auf seiner Unterseite mit einer Anzahl von Einnehmungen (19) versehen ist.

6. Vorrichtung nach Anspruch 1, **dadurch gekennzeichnet**, daß das Rahmengestell (20) aus Längsstreben (20.2 und 20.4) und Querstreben (20.1 und 20.3) besteht, wobei die Querstreben (20.1 und 20.3) an dem umgebenden Rahmen 9, 10, 11) gehalten sind.

7. Vorrichtung nach Anspruch 6, **dadurch gekennzeichnet**, daß die Längsstreben (20.2 und 20.4) an der Gitterwandung des Sieb- bzw. Filterkorbes (8) anliegen.

8. Vorrichtung nach den Ansprüchen 6 und 7, **dadurch gekennzeichnet**, daß zumindest die Längsstreben (20.2 und 20.4) an der Außenseite an ihren Enden mit den Enden der Querstreben (20.1 und 20.3) lösbar verbunden sind.

9. Vorrichtung nach Anspruch 8, **dadurch gekennzeichnet**, daß die lösbare Verbindung (21) aus Zapfen (22) besteht, die an den Enden der Längsstreben (20.2 und 20.4) nach unten ragend in Löcher (23) in den Querstreben (20.1 und 20.3) einpassen.

10. Vorrichtung nach einem oder mehreren der vorhergehenden Ansprüche, **dadurch gekennzeichnet**, daß unterhalb des umgebenden Rahmens (9, 10, 11) eine Abrollvorrichtung (25) für Filtertuch oder -papier angeordnet ist.

## Claims

1. Device for treating the paint sludge made of paint/mordant and water as well as possibly a coagulating agent occurring in a paint shop discharged from a suspension and separation plant, which exhibits upwardly open strain or filter baskets (8) for accommodating the paint sludge which are arranged in or above a drip pan (7), the strainer or filter baskets (8) being impacted by a ram (15) essentially filling up its open cross-section, which is connected via at least one intermediate link to a solidly supported pressure generator arranged above it and the ram (15) consisting of a strong metal sheet, which is provided with holes or perforated and is dished preferably by means of low-angle bends (17) in the direction of pressure so that the outside longitudinal edges are lower than the middle area, the strainer or filter basket (8) in the area of its upper half being surrounded by a horizontally mounted frame support (20) and the solidly supported mounting of the pressure generator (13) or of the compressed air cylinder consisting of a yoke (12) overlapping the strainer basket (8), which is connected to a frame (9, 10, 11) surrounding the strainer basket (8) on the outside and accommodating the latter.

2. Device according to Claim 1, characterized in that the intermediate link consists of at least one pusher rod (15).

3. Device according to Claim 2, characterized in that the pressure generator (13) is a compressed air cylinder whose piston is continued in the pusher rod (14).

4. Device according to one of the above Claims, characterized in that the pressure generator (13) is a spindle.

5. Device according to one of the above Claims, characterized in that the contact beam (9) of the frame (9-12) is provided on its upper site with mounting seats (18) for the strainer basket (8) and on its underside with a number of recesses (19).

6. Device according to Claim 1, characterized in that the frame support (20) consists of longitudinal struts (20.2 and 20.4) and transverse struts (20.1 and 20.3), the transverse struts (20.1 and 20.3) being held on the surrounded frame (9, 10 11).

7. Device according to Claim 6, characterized in that the longitudinal struts (20.2 and 20.4) lie against the grille wall of the strainer or filter basket (8).

8. Device according to Claims 6 and 7, characterized in that at least the longitudinal struts (20.2 and 20.4) are removably connected on the outside by their ends to the ends of the transverse struts (20.1 and 20.3).

9. Device according to Claim 8, characterized in that the removable connection (21) consists of pegs (22) which at the ends of the longitudinal struts (20.2 and 20.4) fit downwards and protrude into holes (23) in the transverse struts (20.1 and 20.3).

10. Device according to one or more of the above Claims, characterized in that an unwinding device (25) for filter cloth or paper is arranged below the surrounding frame (9, 10, 11).

## Revendications

1. Dispositif pour le traitement des boues résiduaires de peinture produites dans un atelier de peinture, déchargées par l'installation de suspension et de précipitation, résultant des produits de peinture/décapage et de l'eau ainsi qu'éventuellement d'un agent de coagulation, dispositif qui présente dans la partie supérieure des crépines ouvertes de tamis ou de filtre (8) pour le recueil des boues résiduaires de peinture, qui sont disposées dans ou au-dessus d'un bac de recueil (7), les crépines de tamis ou de filtre (8) pouvant être alimentées par une matrice de presse (15) remplissant essentiellement leur section transversale ouverte, matrice de presse qui est raccordée au moyen d'un élément intermédiaire à un générateur de pression (13) monté à demeure sur le châssis et la matrice de presse (15) étant constituée par une tôle de forte épaisseur, qui est munie de perforations ou de trous, et qui est arquée au moyen de plis (17) formant des angles plats dans la direction de la pression de sorte que les bords longitudinaux extérieurs sont situés plus bas que la zone médiane, la crépine de tamis ou de filtre (8) étant entourée dans la zone de sa moitié supérieure d'une structure de châssis (20) montée horizontalement et le logement fixé à demeure sur le châssis pour le générateur de pression (13) ou pour le vérin à air comprimé étant constitué par une barre transversale (12) emprisonnant la crépine de tamis (8) par le dessus, barre transversale qui est raccordée avec un châssis (9, 10, 11) entourant la crépine de tamis (8) extérieurement ou supportant celle-ci.

2. Dispositif selon la revendication 1, caractérisé en ce que l'élément intermédiaire est constitué par au moins une tige de compression (15).

3. Dispositif selon la revendication 2, caractérisé en ce que le générateur de pression (13) est un vérin à air comprimé dont le piston se prolonge dans la tige de compression (14).

4. Dispositif selon l'une des revendications précédentes, caractérisé en ce que le générateur de pression (13) est une broche.

5. Dispositif selon l'une des revendications précédentes, caractérisé en ce que le montant (9) du châssis (9 - 12) est muni sur son côté supérieur de sièges de retenue (18) pour la crépine de tamis (8) et sur son côté inférieur d'un certain nombre d'évidements (19).

6. Dispositif selon la revendication 1, caractérisé en ce que la structure de châssis (20) est constituée par des entretoises longitudinales (20.2 et 20.4) et des entretoises transversales (20.1 et 20.3), les entretoises longitudinales (20.1 et 20.3) étant maintenues sur le châssis périphérique (9, 10, 11).

7. Dispositif selon la revendication 6, caractérisé en ce que les entretoises longitudinales (20.2 et 20.4) reposent sur la paroi ajourée de la crépine de tamis ou de filtre (8).

8. Dispositif selon les revendications 6 et 7, caractérisé en ce qu'au moins les entretoises longitudinales (20.2 et 20.4) sur le côté extérieur sont raccordées de façon amovible par leurs extrémités aux extrémités des entretoises transversales (20.1 et 20.3).

9. Dispositif selon la revendication 8, caractérisé en ce que le raccordement amovible (21) est constitué par des tourillons (22) qui s'ajustent aux extrémités des entretoises longitudinales (20.2 et 20.4) en saillie vers le bas dans les trous (23) des entretoises transversales (20.1 et 20.3).

10. Dispositif selon l'une ou plusieurs des revendications précédentes, caractérisé en ce qu'au-dessous du châssis périphérique (9, 10, 11) est agencé un dispositif de déroulement (25) pour le papier ou le tissu de filtre.
